(19)

(11) **EP 3 812 247 B1**

(12) **FASCICULE DE BREVET EUROPEEN**

(45) Date de publication et mention de la délivrance du brevet:
**06.03.2024 Bulletin 2024/10**

(21) Numéro de dépôt: **20201784.4**

(22) Date de dépôt: **14.10.2020**

(51) Classification Internationale des Brevets (IPC):
***B62D 27/02*** *(2006.01)* ***B62D 29/04*** *(2006.01)*
***B29C 65/48*** *(2006.01)* ***B29C 65/14*** *(2006.01)*
*B29L 31/30 (2006.01)* *B29K 23/00 (2006.01)*

(52) Classification Coopérative des Brevets (CPC):
(C-Sets disponibles)
**B62D 27/026; B29C 65/1432; B29C 65/483; B29C 66/0242; B29C 66/112; B29C 66/131; B29C 66/54;** B29C 65/1412; B29C 65/4835; B29C 66/71; B29C 66/712; B29C 66/7212; B29C 66/7311; B29C 66/73113; B29C 66/919;

(Cont.)

(54) **PROCÉDÉ DE COLLAGE D'UN ÉLÉMENT DE CARROSSERIE D'UN VÉHICULE**

KLEBEVERFAHREN FÜR KAROSSERIEELEMENT EINES FAHRZEUGS

METHOD FOR GLUING A BODY PART OF A VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.10.2019 FR 1911760**

(43) Date de publication de la demande:
**28.04.2021 Bulletin 2021/17**

(73) Titulaire: **Compagnie Plastic Omnium SE**
**69007 Lyon (FR)**

(72) Inventeurs:
- **VIRELIZIER, François**
  **01150 Sainte-Julie (FR)**
- **LORNE, Romain**
  **01150 Sainte-Julie (FR)**
- **DESBOIS, Brice**
  **01150 Sainte-Julie (FR)**
- **VERWAERDE, Marc**
  **01150 Sainte-Julie (FR)**

(74) Mandataire: **LLR**
**11, boulevard de Sébastopol**
**75001 Paris (FR)**

(56) Documents cités:
**WO-A1-2016/016560** **GB-A- 1 237 615**
**US-A- 5 554 252**



Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

(52) Classification Coopérative des Brevets (CPC):
(Cont.)
B29C 66/949; B29L 2031/30

C-Sets
B29C 66/71, B29K 2023/06;
B29C 66/71, B29K 2023/12;
B29C 66/71, B29K 2023/38;
B29C 66/71, B29K 2025/04;
B29C 66/71, B29K 2031/00;
B29C 66/71, B29K 2055/02;
B29C 66/71, B29K 2063/00;
B29C 66/71, B29K 2067/00;
B29C 66/71, B29K 2067/003;
B29C 66/71, B29K 2067/006;
B29C 66/71, B29K 2069/00;
B29C 66/7212, B29K 2277/10;
B29C 66/7212, B29K 2307/04;
B29C 66/7212, B29K 2309/08

## Description

L'invention concerne le domaine des éléments de carrosserie de véhicule. L'invention concerne plus particulièrement un procédé de collage d'un élément de carrosserie de véhicule comprenant une pièce d'aspect et une pièce de structure en matière plastique.

Les éléments de carrosseries de ce type, notamment des hayons ou des modules de toit, sont constitués d'une pièce de structure intérieur, par exemple en matériau thermodurcissable et d'une pièce extérieure, dite « peau » extérieure, par exemple en matière thermoplastique, collée sur la pièce de structure et participant à l'aspect extérieur du véhicule. Les éléments de carrosserie sont reliés au châssis du véhicule par la pièce de structure.

La peau formant la face extérieure peut être une pièce, par exemple moulée ou thermoformée, d'une épaisseur inférieure à 4mm, voire de l'ordre de 3mm et pouvant atteindre 2,4mm, et considérée comme faible en regard des autres dimensions de la pièce, teintée dans la masse ou peinte, et résultant du moulage par injection d'un matériau thermoplastique tels que du Polypropylène (PP). La peau et la pièce de structure sont réunies par un cordon de colle adapté pour adhérer sur chacune des pièces, cordon de colle dont l'épaisseur varie de 0,5 mm à 3 mm.

On connaît déjà dans l'état la technique un procédé de collage consistant à déposer un cordon de colle sur la pièce d'aspect avant de mettre en contact la pièce d'aspect avec la pièce de structure. L'ensemble des pièces collées est ensuite pressées et chauffées pour accélérer la réticulation de la colle. Le chauffage se fait à l'extérieur de la pièce de structure. La pièce d'aspect n'est jamais chauffée directement afin de préserver la qualité esthétique. La température utilisée en surface est en générale comprise entre 90°C et 100°C ce qui permet d'obtenir une température dans le cordon de colle qui est comprise entre 70°C à 100°C.

Les documents WO2016/016560, US5554252 et GB1237615 décrivent chacun un procédé de collage d'un élément de carrosserie de véhicule.

Le procédé connu de l'état de la technique ne permet pas de chauffer tout type de pièce de structure car certaines comprennent des zones impossibles à chauffer sans chauffer la pièce d'aspect à cause de la géométrie de la pièce de structure. De telles pièces de structure obligent à prévoir le passage des moyens chauffants et imposent des contraintes dans la conception des pièces. Par ailleurs, le temps de chauffe ainsi que la dilatation des éléments chauffants peuvent également être problématiques dans le procédé de collage.

L'invention a notamment pour but de fournir un procédé de collage compatible avec plupart des éléments de carrosserie de véhicule comprenant une pièce de structure et une pièce d'aspect.

A cet effet l'invention a pour objet un procédé de collage d'un élément de carrosserie de véhicule comprenant une pièce d'aspect et une pièce de structure comprenant les étapes suivantes :

- Étape 1 : on chauffe une zone à encoller sur la pièce de structure au moyen d'un élément chauffant,
- Étape 2 : on dépose une quantité de colle sur une zone à encoller sur la pièce d'aspect,
- Étape 3 : on place la pièce d'aspect sur la pièce de structure,
- Étape 4 : on presse la pièce d'aspect contre la pièce de structure, sans chauffage additionnel.

Le procédé tel que proposé par la présente invention permet de chauffer des zones qui sont non accessibles dans les procédures classiques de chauffe, ces procédures classiques de chauffe étant toujours effectuées sur le côté non collé de la pièce de structure.

De plus, le procédé tel que proposé par la présente invention est plus rapide et plus économe en termes de consommation d'énergie puisqu'il n'y a qu'une phase de préchauffage (pas de chauffe pendant le pressage de la colle). Ceci permet de réduire le risque de déformation des pièces et la dilatation des éléments chauffants.

Le choix de l'agencement de l'élément chauffant se fait en fonction de la géométrie de la pièce de structure et des contraintes pouvant se présenter sur la ligne de fabrication de manière à ce que l'élément chauffant soit agencé au plus près de la zone à encoller sur la pièce de structure pour une meilleure efficacité de chauffe.

Suivant d'autres caractéristiques optionnelles du procédé de collage prises seules ou en combinaison :

- L'étape 1 consiste à agencer l'élément chauffant sur le côté intérieur de la pièce de structure et chauffer directement la zone à encoller sur la pièce de structure (3). Ceci permet de chauffer efficacement la zone à encoller.

Le côté intérieur donc la zone à encoller destinée à recevoir de la colle.

Alternativement, on peut combiner le chauffage de la zone à encoller avec une chauffe de l'extérieur de la pièce de structure, c'est-à-dire la face visible de la pièce de structure qui ne porte pas de colle. Ainsi, il est possible de chauffer les deux côtés de la pièce de structure au niveau de la zone à encoller, en fonction de la géométrie de la pièce et des contraintes de positionnement des moyens chauffants, afin de rendre le chauffage plus efficace.

- la pièce de structure est formée d'un matériau dont la capacité thermique massique (ou la chaleur spécifique) est supérieure à

[Math 1]

$$1KJ \cdot kg^{-1} \cdot k^{-1}$$

à 20°C.

- La pièce de structure est formée d'un matériau ayant une diffusivité qui est inférieur à

[Math 2]

$$100 \times 10^{-6}\ m^2/s$$

à 20°C.

- La pièce de structure est formée d'un matériau ayant une conductivité thermique qui est inférieure à 80W/mK à 20°C.
- La pièce de structure est formée d'un matériau choisi parmi la liste suivante :
    - Polypropylène renforcé par des fibres de verre (PPGFL) ou des fibres de carbone,
    - Acrylonitrile Butadiène Styrène (ABS),
    - Polycarbonate (PC),
    - Polypropylène (PP),
    - Styrénique,
    - Polyéthylène Téréphtalate (PET),
    - matériaux thermodurcissable tels que polyesters, vinylesters, epoxy, qu'ils soient chargés de fibre de verre, de carbone, d'aramide ou autres.
- La pièce d'aspect est formée d'un matériau choisi parmi les matériaux suivants :
    - Polypropylène (PP),
    - Polycarbonate (PC),
    - Acrylonitrile Butadiène Styrène (ABS),
    - Polycarbonate (PC),
    - Polypropylène Téréphtalate (PBT),
    - Polyéthylène Téréphtalate (PET),
    - Polyéthylène (PE),
    - Copolymère cyclo-oléfinique(COC),
    - Toile.
- L'élément chauffant est un moyen de chauffage par rayonnement, par exemple du type infra-rouge. Le moyen de chauffage choisi permet de chauffer rapidement la pièce de structure sans besoin de contact avec celle-ci. Un tel moyen de chauffage « sans contact » est particulièrement intéressant dans la mesure où la pièce de structure ne doit pas être polluée dans la zone à encoller, c'est-à-dire la zone destinée à entrer en contact avec le cordon de colle déposé sur la pièce de structure, qui elle, est ensuite pressée sur la pièce de structure pour le collage.
- L'étape 1 consiste à chauffer la zone à encoller pendant une durée qui est comprise entre 15 et 60 secondes, de préférence entre 25 et 35 secondes et à une température qui est comprise entre 95°C et 125°C pour que la pièce de structure puisse ensuite transmettre la chaleur au cordon de colle de façon optimale.
- L'étape 2 consiste à utiliser une colle comprenant un catalyseur permettant la réticulation de la colle à une température inférieure à 70°C. Ainsi, il n'est pas nécessaire de prévoir un moyen de chauffage pendant le pressage ce qui simplifie le procédé de collage. Le catalyseur peut être choisi dans la famille des amines employés dans les matériaux polyuréthane (PU), par exemple du bis[2-(N,N-diméthylamino) éthyl] éther. Il est également envisageable d'utiliser du polyoxypropylène diamine comme catalyseur dans la colle.

Un élément de carrosserie de véhicule automobile, ne faisant pas partie de la présente invention, peut être obtenu par le procédé de collage précédemment décrit, l'élément étant notamment un hayon ou une porte de coffre arrière, un becquet de toit ou de hayon, ou un capot ou une porte latérale, ou encore module de toit additionnel au-dessus du véhicule.

## Brève description des figures

L'invention sera mieux comprise à la lecture de la description qui va suivre donnée uniquement à titre d'exemple et faite en se référant aux dessins annexés dans lesquels :

[Fig. 1] la figure 1 est une vue en perspective d'un élément de carrosserie selon un mode de réalisation avant le procédé de collage ;
[Fig. 2] la figure 2 est une vue de coupe d'une pièce de structure de l'élément de carrosserie de la figure 1 ;
[Fig.3] la figure 3 est une vue de coupe d'une pièce d'aspect de l'élément de carrosserie de la figure 1 ;
[Fig. 4] la figure 4 est une vue de coupe de l'élément de carrosserie de la figure 1 après le procédé de collage.

## Description détaillée

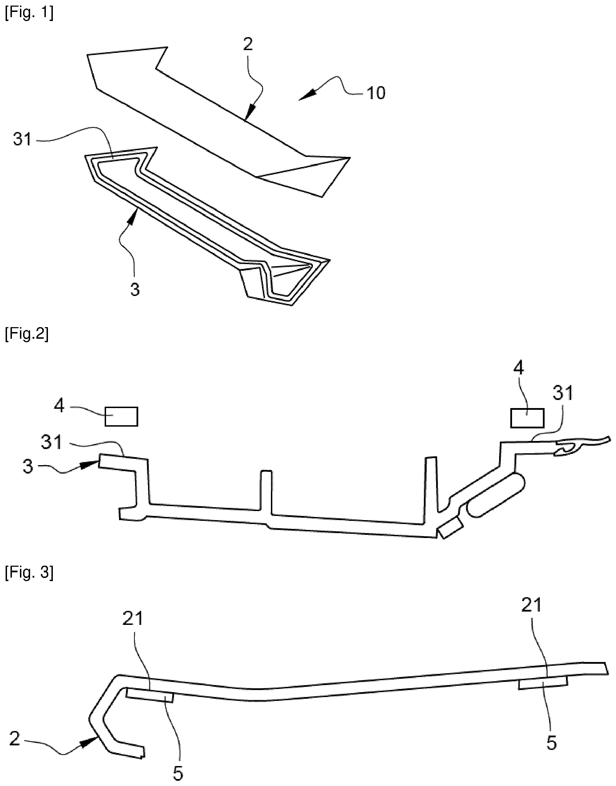

On a représenté sur les figures 1 à 4 un élément de carrosserie réalisé par un procédé de collage selon un mode de réalisation de l'invention, désigné par la référence générale 1. L'élément de carrosserie 1 est un becquet de voiture dans cet exemple et comprend une pièce d'aspect 2 et une pièce de structure 3.

La pièce de structure 3 est par exemple formée d'un matériau ayant un coefficient de conductivité / une diffusivité qui est inférieur à

[Math 3]

$$100 \times 10^{-6}\ m^2/s$$

à 20°C.

Avantageusement, la pièce de structure 3 est formée d'un matériau choisi parmi les matériaux suivants :

- polypropylène renforcé par des fibres de verre (PPGFL) ou des fibres de carbone,
- Acrylonitrile Butadiène Styrène (ABS),
- Polycarbonate (PC),
- Polypropylène (PP),
- Styrénique,
- Polyéthylène Téréphtalate (PET),
- matériaux thermodurcissable tels que polyesters, vinylesters, epoxy, qu'ils soient chargés de fibre de verre, de carbone, d'aramide ou autres.

La pièce de structure 3 présente une zone à encoller 31 qui est répartie sensiblement sur la périphérie de la pièce de structure 3. La zone à encoller 31 présente une surface plane qui est configurée pour recevoir un cordon de colle permettant de coller la pièce d'aspect 2 sur la pièce de structure 3

La figure 2 illustre la pièce de structure 3 avant collage. Selon un mode de réalisation de l'invention, on dépose d'abord la pièce de structure 3 sur un support et on chauffe la zone à encoller 31 au moyen d'un élément chauffant 4 qui est agencé à proximité de la zone à encoller 31, en regard du côté non visible. Dans l'exemple illustré, l'élément chauffant 4 est un élément chauffant à infrarouge ou tout autre moyen de chauffage par rayonnement.

La température de chauffe en surface sur la zone à encoller 31 est comprise entre 95°C et 125°C. Le chauffage de la zone à encoller 31 est prévu pour une durée qui est comprise entre 25 et 35 secondes. Après cette durée, on retire l'élément chauffant 4.

Après l'étape de chauffe ou simultanément, on dépose une quantité de colle 5 sur une zone à encoller 21 sur la pièce d'aspect, tel qu'illustré à la figure 3. La colle utilisée selon l'invention comprend un catalyseur permettant la réticulation de la colle à une température inférieure à 70°C. Selon d'autres variantes de l'invention, l'élément chauffant 4 peut demeurer à proximité des pièces afin d'éviter des opérations supplémentaires, tant que la géométrie de la pièce de structure le permet. Néanmoins, l'élément chauffant 4 arrête de fonctionner.

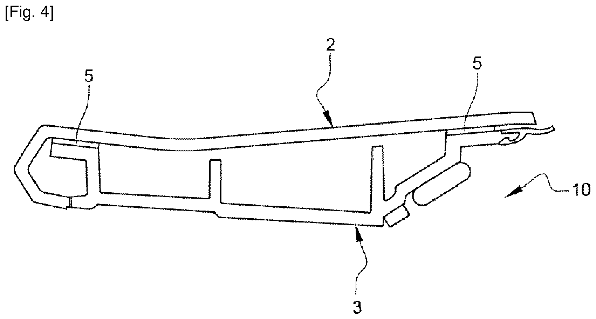

Par la suite, comme visible à la figure 4, on place la pièce d'aspect 2 sur la pièce de structure 3 et on presse la pièce d'aspect 2 contre la pièce de structure 3 sans nécessairement apporter de chauffage supplémentaire. On attend jusqu'à ce que la colle soit suffisamment réticulée pour être manipulable avant de retirer l'élément de carrosserie 1 ainsi collé du support.

L'invention n'est pas limitée aux modes de réalisation présentés et d'autres modes de réalisation apparaîtront clairement à l'homme du métier. Notamment, dans des autres configurations où l'élément chauffant est agencé dans une zone accessible une fois que la pièce de structure 3 et la pièce d'aspect 2 sont pressées ensemble, l'élément chauffant peut continuer à chauffer les pièces jusqu'à la fin du collage.

**Liste de références**

Élément de carrosserie : 10
Pièce d'aspect : 2
Pièce de structure : 3
Zone à encoller : 21, 31
Élément chauffant : 4
Colle : 5

**Revendications**

**1.** Procédé de collage d'un élément de carrosserie (10) de véhicule comprenant une pièce d'aspect (2) et une pièce de structure (3) comprenant les étapes suivantes :

- Étape 1 : on chauffe une zone à encoller (31) sur la pièce de structure (3) au moyen d'un élément chauffant (4),
- Étape 2 : on dépose une quantité de colle sur une zone à encoller (31) sur la pièce d'aspect (2),
- Étape 3 : on place la pièce d'aspect (2) sur la pièce de structure (3),

**caractérisé en ce que** le procédé comprend encore l'étape suivante :

- Étape 4 : on presse la pièce d'aspect (2) contre la pièce de structure (3), sans chauffage additionnel.

**2.** Procédé selon a revendication 1 dans lequel l'étape 1 consiste à agencer l'élément chauffant (4) sur le côté intérieur de la pièce de structure et chauffer directement la zone à encoller (31) sur la pièce de structure (3).

**3.** Procédé selon l'une des revendication 1 ou 2 dans lequel la pièce de structure (3) est formée d'un matériau dont la capacité thermique massique est supérieure à

$$1KJ \cdot kg^{-1} \cdot k^{-1}$$

à 20°C.

**4.** Procédé selon l'une quelconque des revendications précédentes dans lequel la pièce de structure (3) est formée d'un matériau ayant une diffusivité qui est inférieure à

$$100 \times 10^{-6}\, m^2/s$$

à 20°C.

**5.** Procédé selon l'une quelconque des revendications précédentes dans lequel la pièce de structure (3) est formée d'un matériau ayant une conductivité thermique qui est inférieure à 80W/mK à 20°C.

**6.** Procédé selon l'une quelconque des revendications précédentes dans lequel la pièce de structure (3) est formée d'un matériau choisi parmi la liste suivante :

- polypropylène renforcé par des fibres de verre (PPGFL) ou des fibres de carbone,
- Acrylonitrile Butadiène Styrène (ABS),
- Polycarbonate (PC),
- Polypropylène (PP),
- Styrénique,
- Polyéthylène Téréphtalate (PET),
- matériaux thermodurcissable tels que polyesters, vinylesters, epoxy, qu'ils soient chargés de fibre de verre, de carbone, d'aramide ou autres.

**7.** Procédé selon l'une quelconque des revendications précédentes dans lequel la pièce d'aspect (2) est formée d'un matériau choisi par les matériaux suivants :

- Polypropylène (PP),
- Polycarbonate (PC),
- Acrylonitrile Butadiène Styrène (ABS),
- Polycarbonate (PC),
- Polypropylène Téréphtalate (PBT),
- Polyéthylène Téréphtalate (PET),
- Polyéthylène (PE),
- Copolymère cyclo-oléfinique(COC),
- Toile.

**8.** Procédé selon l'une quelconque des revendications précédentes dans lequel l'élément chauffant (4) est un moyen de chauffage par rayonnement, par exemple du type infra-rouge.

**9.** Procédé selon l'une quelconque des revendications précédentes dans lequel l'étape 1 consiste à chauffer la zone à encoller (31) pendant une durée qui est comprise entre 15 et 60 secondes, de préférence entre 25 et 35 secondes et à une température qui est comprise entre 95°C et 125°C.

**10.** Procédé selon l'une quelconque des revendications précédentes dans lequel l'étape 2 consiste à utiliser une colle permettant la réticulation de la colle à une température inférieure à 70°C.

**Patentansprüche**

**1.** Verfahren zum Verkleben eines Karosserieelements (10) eines Fahrzeugs, das ein Sichtteil (2) und ein Strukturteil (3) aufweist, aufweisend die folgende Schritte:

- Schritt 1: Erwärmen einer zu verklebenden Zone (31) auf dem Strukturteil (3) mit Hilfe eines Heizelements (4),
- Schritt 2: Auftragen einer Klebstoffmenge auf eine zu verklebende Zone (31) auf dem Sichtteil (2),
- Schritt 3: Anbringen des Sichtteils (2) auf dem Strukturteil (3), **dadurch gekennzeichnet, dass** das Verfahren weiterhin den folgenden Schritt aufweist:
- Schritt 4: Andrücken des Sichtteils (2) gegen das Strukturteil (3) ohne zusätzliche Erwärmung.

**2.** Verfahren nach Anspruch 1, bei dem in Schritt 1 das Heizelement (4) an der Innenseite des Strukturteils angeordnet wird und der zu verklebende Bereich (31) auf dem Strukturteil (3) direkt erhitzt wird.

**3.** Verfahren nach einem der Ansprüche 1 oder 2, wobei das Strukturteil (3) aus einem Material mit einer Massenwärmekapazität von mehr als $1 KJ \cdot kg^{-1} \cdot k^{-1}$ bei 20°C gebildet wird.

**4.** Verfahren nach einem der vorhergehenden Ansprüche, wobei das Strukturteil (3) aus einem Material mit einer Diffusivität gebildet wird, die bei 20°C weniger als $100 \times 10^{-6}\ m^2/s$ beträgt.

**5.** Verfahren nach einem der vorhergehenden Ansprüche, wobei das Strukturteil (3) aus einem Material mit einer Wärmeleitfähigkeit von weniger als 80 W/mK bei 20°C gebildet wird.

**6.** Verfahren nach einem der vorhergehenden Ansprüche, bei dem das Strukturteil (3) aus einem Material gebildet wird, das aus der folgenden Liste ausgewählt ist:

- Glasfaserverstärktes Polypropylen (PPGFL) oder Kohlenstofffasern,
- Acrylnitril-Butadien-Syren (ABS),
- Polycarbonat (PC),
- Polypropylen (PP),
- Styrol (Styrenic),

- Polyethylen-Terephthalat (PET),
- duroplastische Materialien wie Polyester, Vinylester, Epoxid, unabhängig davon, ob sie mit Glas-, Kohlenstoff-, Aramid- oder anderen Fasern gefüllt sind.

**7.** Verfahren nach einem der vorhergehenden Ansprüche, bei dem das Sichtteil (2) aus einem Material gebildet wird, das aus den folgenden Materialien ausgewählt wird:

- Polypropylen (PP),
- Polycarbonat (PC),
- Acrylnitril-Butadien-Styrol (ABS),
- Polycarbonat (PC),
- Polypropylen-Terephthalat (PBT),
- Polyethylen-Terephthalat (PET),
- Polyethylen (PE),
- Cycloolefinisches Copolymer (COC),
- Leinwand.

**8.** Verfahren nach einem der vorhergehenden Ansprüche, wobei das Heizelement (4) ein Strahlungsheizmittel ist, z. B. vom Infrarottyp.

**9.** Verfahren nach einem der vorhergehenden Ansprüche, bei dem in Schritt 1 der zu verklebende Bereich (31) für eine Dauer zwischen 15 und 60 Sekunden, vorzugsweise zwischen 25 und 35 Sekunden, auf eine Temperatur zwischen 95°C und 125°C erhitzt wird.

**10.** Verfahren nach einem der vorhergehenden Ansprüche, bei dem in Schritt 2 ein Klebstoff verwendet wird, der die Vernetzung des Klebstoffs bei einer Temperatur unter 70 °C ermöglicht.

## Claims

**1.** Method for bonding a vehicle body part (10) comprising an aspect part (2) and a structural part (3) comprising the following steps:

- Step 1: heating a gluing area (31) on the structural part (3) using a heating element (4),
- Step 2: applying an amount of glue on an area to be glued (31) on the aspect part (2),
- Step 3: placing the aspect part (2) on top of the structural part (3), **characterized in that** the mehod also comprises the following step:
- Step 4: pressing the aspect part (2) against the structural part (3), without additional heating.

**2.** Method according to claim 1 wherein step 1 consists of arranging the heating element (4) on the inner side of the structural part and directly heat the area to be glued (31) on the structural part (3).

**3.** Method according to one of claim 1 or 2 wherein the structural member (3) is formed with a material having a heat mass capacity greater than

$$1KJ \cdot kg^{-1} \cdot k^{-1}$$

at 20°C.

**4.** Method according to any one of the preceding claims wherein the structural part (3) is formed of a material having a diffusivity which is less than

$$100 \times 10^{-6}\ m^2/s$$

at 20°C.

**5.** Method according to any one of the preceding claims wherein the structural part (3) is formed of a material having a thermal conductivity which is less than 80W/mK at 20°C.

**6.** Method according to any one of the preceding claims wherein the structural part (3) is formed of a material selected from the following list:

- glass fibre reinforced polypropylene (PPGFL) or carbon fibres,
- Acrylonitrile Butadiene Styrene (ABS),
- Polycarbonate (PC),
- Polypropylene (PP),
- Styrenic,
- Polyethylene Terephthalate (PET),
- Thermosetting materials such as polyesters, vinylesters, epoxy, whether filled with fiberglass, carbon fibers, aramid or others.

**7.** Method according to any one of the preceding claims wherein the aspect part (2) is formed of a material selected by the following materials:

- Polypropylene (PP),
- Polycarbonate (PC),
- Acrylonitrile Butadiene Styrene (ABS),
- Polycarbonate (PC),
- Polypropylene Terephthalate (PBT),
- Polyethylene Terephthalate (PET),
- Polyethylene (PE),
- Cycloolefin copolymer (COC),
- Canvas.

**8.** Method according to any one of the preceding claims wherein the heating element (4) is a means of radiant heating, e.g. of the infrared type.

**9.** Method according to any one of the preceding claims wherein step 1 consists of heating the area to be glued (31) for a period comprised between 15 and 60 seconds, preferably between 25 and 35 seconds and at a temperature comprised between 95°C and 125°C.

**10.** Method according to any one of the preceding claims wherein step 2 consists of using an adhesive for cross-linking the adhesive at a temperature below 70°C.

[Fig. 1]

2
10
31
3

[Fig.2]

4
31
3
4
31

[Fig. 3]

21
21
2
5
5

[Fig. 4]

2
5
5
10
3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 2016016560 A
- US 5554252 A
- GB 1237615 A